# EUROPEAN PATENT APPLICATION

(11) **EP 1 052 128 A2**
(43) Date of publication of application: **15.11.2000**
(21) Application number: 00300515.4
(22) Date of filing: 25.01.2000
(51) Int. Cl.: B60J 7/185

(54) **Roof locking mechanism**

(30) Priority: 10.05.1999 GB 9910800
(71) Applicant: Cramp, James Ronald, Chipping Ongar, Essex CM5 0DA (GB)
(72) Inventor: Cramp, James Ronald, Chipping Ongar, Essex CM5 0DA (GB)
(74) Representative: Jehan, Robert

(57) **Abstract**

A roof locking mechanism (10) is provided for locking a raiseable roof (50) of a vehicle or vehicle trailer in a raised position without the need for maintenance of the roof raising force. The locking mechanism includes a guide (12) provided on the vehicle and a follower (22-28) provided on the roof (50). The follower includes a roller bearing (28) which moves along the guide (12) and which becomes locked in a roof raised position by resting into a recess (36) of the guide channel (12). A diverted clip (34) provides for diversion away from the recess (36) and can be moved from a deployed position to an undeployed position by the roller bearing (28) and by a pin (40) on the follower mechanism on the roof (50) respectively. Thus automatic locking and unlocking of the roof (50) in its raised position is provided.

## Description

The present invention relates to a locking device for a roof lifting mechanism on, for example, a lorry trailer.

Trailers and lorries with roofs which can be raised or lowered have been known for some time. A particular system which has shown considerable commercial success is described in British patent 2299311 in which inflatable air bags are provided to lift and lower the roof of a trailer on inflation and deflation of the air bags. Such systems are very advantageous in allowing a lorry to be fully laden, without loss of space around the roof area. However, they are unsuitable for keeping a roof in a raised position for any substantial length of time, in particular for any length of time beyond loading and unloading.

Vehicles and trailers are required in many countries to be limited in height, with the maximum height varying from one country to the next. This can result in having to change goods from one lorry to another to meet differing legal restrictions.

The present invention seeks to provide a locking mechanism for a vehicle or trailer roof which can enable the roof to be operated at a plurality of heights.

According to an aspect of the present invention, there is provided a locking mechanism for a vehicle or vehicle trailer operable to lock the roof of the vehicle or vehicle trailer in at least one elevated position.

The locking mechanism preferably provides automatic locking upon raising of the roof. In a preferred embodiment, the locking action is effected by release of a roof raising force.

Preferably, the locking mechanism provides an automatic unlocking action. In the described embodiment, the unlocking action takes effect on application of a small raising force.

An embodiment of the present invention is described below, by way of example only, with reference to the accompanying drawings, in which:
Figure 1 is a side elevational view of an embodiment of locking mechanism in a semi-closed position;
Figure 2 is a side elevational view of the embodiment of Figure 1 in a roof raised and locked position;
Figure 3 is a front elevational view of the locking mechanism of Figure 1 in the roof raised and locked position;
Figures 4 to 6 show the locking mechanism in various operating conditions; and
Figures 7 and 8 show an embodiment of under-mounted roof raising mechanism.

The embodiment of roof locking mechanism described is designed for use with the roof raising system described in British patent 2299311. In this type of roof raising mechanism, a plurality of inflatable bags is provided at appropriate locations coupled to a raisable roof. Inflation of the bags causes the roof to rise whereas deflation of the bags causes the roof to lower. Typically, two inflatable bags may be provided, although the number would typically be chosen by a skilled person in dependence upon the nature of the particular vehicle or trailer for which the mechanism is to be used.

Full details of the inflatable roof raising mechanism can be found in British patent 2299311 so will not be described in further detail herein.

In the preferred embodiment described herein, the roof lifting mechanism is provided with a plurality of locking mechanisms of the type described below. Typically, there may be provided four locking mechanisms, at each corner of the vehicle or trailer roof.

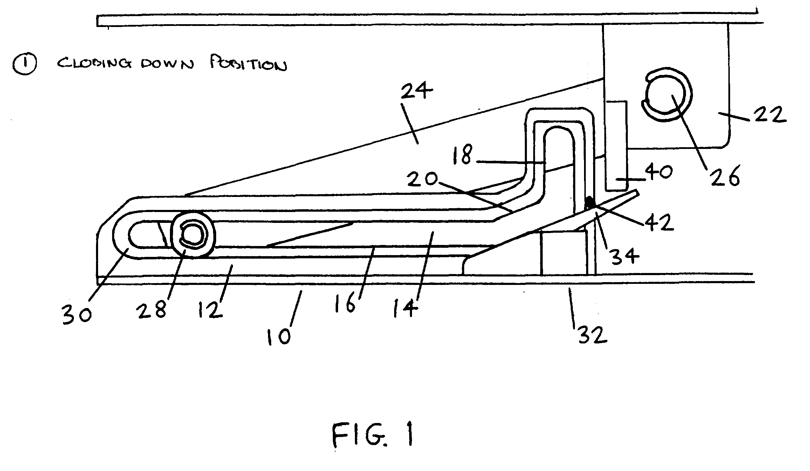

Referring to Figure 1, the embodiment of locking mechanism 10 includes a fixed base member 12 which provides a guide channel 14 which includes a substantially horizontal guide portion 16 and a substantially vertical guide portion 18 linked to the horizontal guide portion 16 by an intermediate guide portion 20 shown being at an angle of approximately 30° to the horizontal guide portion 16. As is apparent from the operational description below, the actual orientations of the various guide portions 16-20 can be chosen as desired and are described as horizontal and vertical merely for the purposes of illustration.

In use, the base member 12 is fixed to a non-movable part of the vehicle or trailer, such as around the top of the outside wall of the trailer, in the case where the roof lifting mechanism is located by and immediately below the raisable roof.

The locking mechanism 10 is also provided with a pivot support 22 which is fixed to a movable component of the raisable roof, in this example to the roof itself. Attached to the pivot support 22 is a supporting strut 24 pivotably coupled thereto, in this example, by means of a shortened shaft 26 of circular cross-section which sits within a circular bore of the pivot support 22. The other end of the support strut 24 is provided with a roller bearing 28 which is designed to have a groove (not shown) within which a reduced thickness flange 30 either side of the guide channel 14 sits, such that the roller bearing 28 can only move along the guide channel 14, constrained by the reduced thickness flange 30.

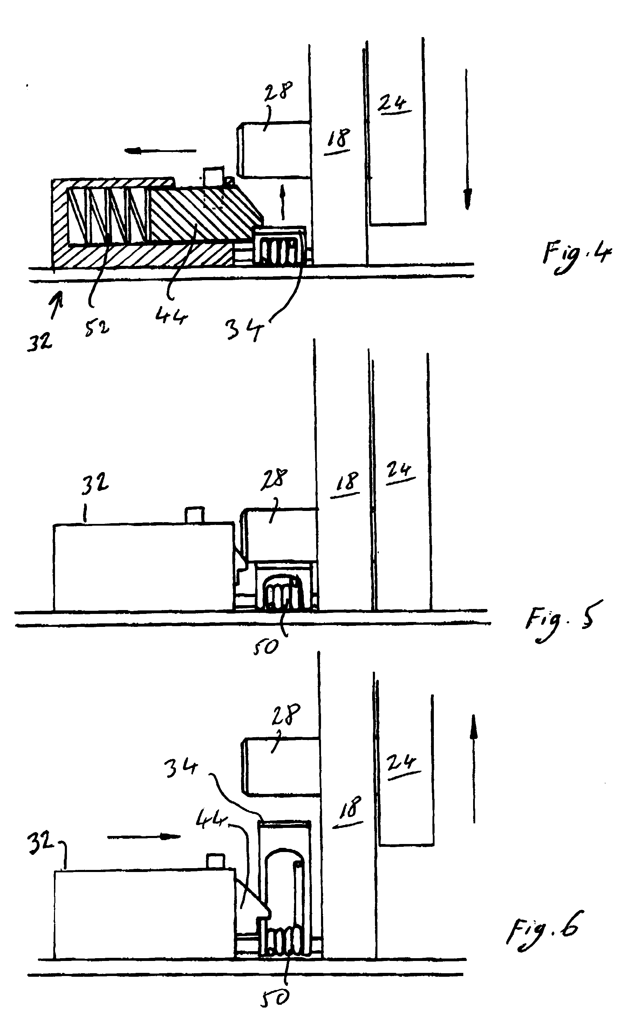

The locking mechanism 10 is also provided with a diverter mechanism 32 which includes a diverter clip 34 and along which the roller bearing 28 can be guided. A biasing spring 50 (Figures 4 to 6) urges the diverter clip 34 to the upper position shown in Figure 1.

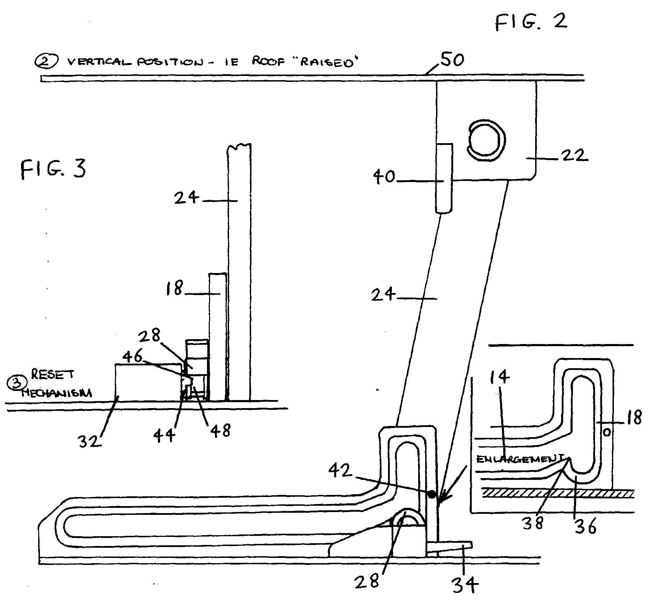

Referring to Figure 2, the guide channel 14 is shown in enlarged section and includes as part of the vertical guide portion 18 a guide recess 36 within which the roller bearing 28 can rest, with a shoulder 38 of this portion preventing movement of the roller bearing 28 onto the horizontal portion 14. This will be described in further detail below.

Figures 1 and 2 also show depending projection 40 fixed to the pivot support 22. Also shown is a diverter clip stop 42 located on the vertical section 18 of the guide channel 14.

Referring to Figures 3 to 6, it can be seen that projecting from the casing the diverter mechanism 32 is a latch 44 which is biased in its extended position shown by any suitable biasing mechanism, such as coil spring 52 (Figure 4) provided within the casing of the diverter mechanism 32. The latch 44 is provided with a tapered upper surface 46 which, in this embodiment, is at an angle of around 45° from the vertical. It is also provided with a locking shoulder 48 to lock the diverter clip 34 from upward movement.

As explained above, a vehicle trailer would typically have four such locking mechanisms 10, provided at the four corners of the raisable roof. The number and arrangement of these locking mechanisms 10 can be readily determined by a skilled person from the teachings herein.

The operation of the locking mechanism will now be described with reference to Figures 1 to 6. Referring to Figure 1, the vehicle roof is in the process of being lowered and is close to its lowermost position. As can be seen, the roller bearing 28 is close to the extremity of the horizontal portion of the guide channel 14. At this point, as can be seen, the projection 40 depending from the pivot support 22 is close to abutting the diverter clip 34. On further lowering of the vehicle roof 50, the projection 40 pushes the diverter clip 34 downwardly. In so doing, the diverter clip 34 passes over the tapered upper surface 46 of the latch 44 (Figure 3), pushing the latch 44 into the diverter mechanism housing 32. On substantially complete lowering of the roof 50, the projection 40 pushes the diverter clip 34 beyond the maximum extremity of the latch 44, such that the latch is again pushed outwardly by its biasing spring 52, thereby presenting the latching shoulder 48 to the upper surface of the diverter clip 34 and holding the diverter clip in the lowered position seen in Figures 2 and 4. In the lowered position, the recess 36 of the vertical portion 18 of the guide channel 14 becomes effective.

When the roof is then raised, for example by inflation of the air bags, the roller bearing 28 is urged towards the vertical section 18 of the guide channel 14 and eventually into this vertical section 18, following the intermediate section 20. Once the roller bearing 28 has reached the vertical section 18, that is once the vehicle roof has been raised, the air bags are deflated, or other raising mechanism lowered, such that the roller bearing 28 falls into the recess 36. In this position, the support strut 24 acts to support the roof 50 securely in its upper position as the roller bearing 28 cannot move over the shoulder 38 provided by the recess 36 of the guide channel 14. The roof is thus firmly fixed in this upper position irrespective of the state of the lifting device.

In this lowermost position, the roller bearing 28 acts upon the latch 44, specifically on the tapered surface 46, to push the latch into the diverter mechanism housing 32, such that the diverter clip 34 can move beyond the shoulder 48 of the latch 44. This can be seen in Figure 5. However, the pressure exerted by the roller bearing 28 on the diverter clip 34 (caused by the weight of the vehicle roof) is such as to prevent the diverter clip 34 from moving the roller bearing 28 out of the recess 36.

On re-inflation of the air bags or raising of the roof by any other mechanism, the roller bearing 28 is moved out of the recess 36 of the guide channel 14 and the diverter clip 34 is thus allowed to move upwardly under the force of its biasing spring 50 (see Figure 6) up to the position of the stop 42. Thus, the diverter clip 34 re-attains the position shown in Figure 1. The air bags can subsequently be deflated, in which case the roller bearing 28 is guided by the diverter clip 34 towards the horizontal portion 16 of the guide channel 14 and away from the recess 36. Thus, the roof 50 can be lowered fully. The weight of the roller bearing 28 and any frictional resistance of the bearings of the support strut 24 are insufficient to overcome by themselves the upward biasing force of the spring 50 on the diverter clip 34.

The roof 50 can then be lowered as shown in Figure 1, eventually with the projection 40 pushing the diverter clip 34 downwardly by means of the weight of the roof 50 and again into locking engagement with the latch 44 to be ready for the next cycle of the operation.

Thus, the roof can be raised and lowered with automatic locking and unlocking in the upward position. This enables simple and effective use of any existing raising mechanism, preferably the air bag mechanism disclosed in British patent 2299311, and reliable retention of the roof 50 in the upright position.

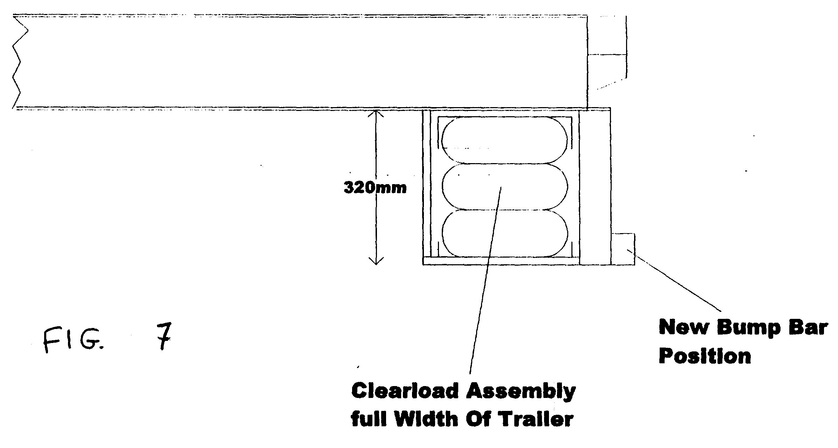

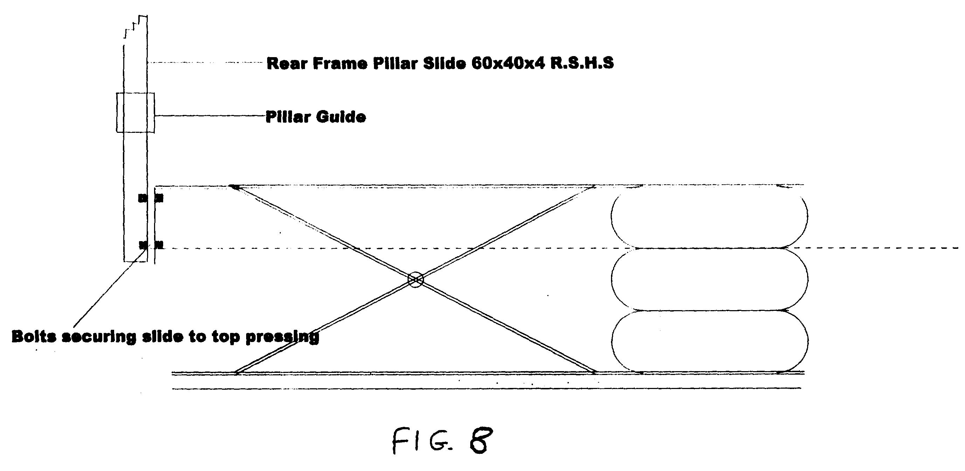

Figures 7 and 8 show an alternative arrangement for the roof lifting mechanism, in which a plurality of air bags are provided underneath the floor of the vehicle or trailer and which in use move upright support struts coupled to the vehicle roof. In this embodiment, the air bags could be used to raise or to lower the roof, in the latter example the roof being provided with a biasing spring to bias it into the upper position. Locking mechanisms of the type shown in Figures 1 to 6 and described above would be provided in a manner which would be clearly apparent to the skilled reader in light of the teachings in this application.

## Claims

1. A roof locking mechanism for a vehicle or vehicle trailer including a raisable roof (50), operable to lock the roof (50) in at least one elevated position independently of any raising force.

2. A roof locking mechanism according to claim 1, operable to provide automatic locking upon raising of the roof (50).

3. A roof locking mechanism according to any preceding claim, operable to provide automatic unlocking of the roof.

4. A roof locking mechanism according to any preceding claim, including a guide (12) provided on one of the vehicle or vehicle trailer and the roof, and a follower (22-28) provided on the other of the vehicle or vehicle trailer and the roof, the guide including locking means (38) to lock the follower (22-28) when the roof reaches a predetermined height.

5. A roof locking mechanism according to claim 4, wherein the locking means includes a recessed portion (38) within which the follower (28) can reside to prevent movement of the follower (28) in the guide (12) and thereby to lock the roof (50).

6. A roof locking mechanism according to claim 4 or 5, including a diverter member (34) operable to divert the follower (28) away from the locking means (38).

7. A roof locking mechanism according to claim 7, wherein the diverter member (34) is movable to an undeployed position when the roof (50) is moved to a lowermost height and to a deployed position once the follower (28) moves into the recessed portion (38) for subsequent unlocking of the roof (50) from the raised position.
